# EUROPÄISCHE PATENTSCHRIFT

(11) **EP 0 797 865 B1**
(45) Veröffentlichungstag und Bekanntmachung des Hinweises auf die Patenterteilung: **29.07.1998**
(21) Anmeldenummer: 95942079.5
(22) Anmeldetag: 08.12.1995
(51) Int. Cl.: H02M 1/12

(54) **NETZGLEICHRICHTERSCHALTUNG**
POWER RECTIFIER CIRCUIT
CIRCUIT REDRESSEUR DE SECTEUR

(30) Priorität: 12.12.1994 AT 23139/49
(43) Veröffentlichungstag der Anmeldung: 01.10.1997
(73) Patentinhaber: Siemens Aktiengesellschaft Österreich, 1210 Wien (AT)
(72) Erfinder: SPITALER, Wolfgang, A-1030 Wien (AT)
(74) Vertreter: Epping, Wilhelm, Dr.-Ing.
(86) Internationale Anmeldenummer: EP9504838
(87) Internationale Veröffentlichungsnummer: WO9619037

(56) Entgegenhaltungen:
- DE-A-19 506 587
- JP-A-61 173 322

## Beschreibung

Die Erfindung bezieht sich auf eine Netzgleichrichterschaltung für Stromversorgungsgeräte, insbesondere für Schaltnetzteile, mit einem an der Netzspannung liegenden Vollweggleichrichter, dem ein Ladekondensator nachgeschaltet ist.

Derartige Stromversorgungsgeräte, insbesondere Schaltnetzteile zum Anschluß an ein Wechselstromnetz, weisen im einfachsten Fall einen Gleichrichter auf, dem ein Elektrolytkondensator nachgeschaltet ist. Der Ladestromverlauf des Kondensators führt zu starken Oberwellen im Netz und belastet dieses durch eine hohe Scheinleistung. Die Massenverwendung von Stromversorgungsgeraten innerhalb der letzten 20 Jahre hat aus diesen Gründen bereits zu ernsthaften Problemen in den Versorgungsnetzen geführt.

Eine kurze Darstellung dieser Problematik und verschiedene Lösungsansatze, die zu einer ausgewogenen Netzbelastung führen sollen, sind in dem Artikel "Comparison of Standards and Power Supply Design Options for Limiting Harmonic Distortion in Power Systems", von Key und Lai, in "IEEE Transactions on Industrie Applications" Vol.20, No.4, July/August 1993, p.688 bis 695 zu finden. Einige der dort aufgezeigten und in der Praxis auch angewandten Schaltungen besitzen einen sogenannten "Boost-Converter". Mittels einer aufwendigen Streuerung läßt sich mit diesem sogar ein praktisch sinusförmicer Verlauf des Eingangsstromes erzielen. Wie in dem Artikel bemerkt wird, stehen einer breiten Markteinführung jedoch die höheren Kosten und die geringere Zuverlässigkeit entgegen, cie durch zusätzliche Bauteile bedingt ist.

Aus dem Dokument JP,A,61 173 322, Figur 18 ist eine Gleichrichterschaltung mit einem von einem Zweiweggleichrichter gespeisten Hauptschaltkreis und mit einem von zwei Dioden gespeisten Zusatzschaltkreis bekannt. Im Hauptschaltkreis erfolgt der Leistungsfluß von einer Wechselspannungsquelle zur Last dabei über eine Spule, einen Transistor und eine in Serie geschaltete Induktivität mit Widerstand.

Aufgabe der Erfindung ist die Schaffung einer einfachen und kostengünstigen Lösung, welche zu einer merklichen Verringerung des Oberwellenanteils und zu einer Verbesserung des Leistungsfaktors führt.

Die Aufgabe wird mit einer Netzgleichrichterschaltung für Stromversorgungsgeräte, insbesondere für Schaltnetzteile gelöst, mit einem an der Netzspannung liegenden Vollweggleichrichter, dem ein Ladekondensator nachgeschaltet, ist sowie mit zumindest einem gesteuerten Schalter zur getakteten zusätzlichen Energieübergabe an die Last, bei welcher erfindungsgemäß die Last an dem Ausgang des Vollweggleichrichters liegt und der Ladekondensator mit der Last über einen ersten gesteuerten Schalter verbunden ist, welcher über eine erste Ansteuerschaltung so gesteuert ist, daß er in einem Zeitbereich um die Nulldurchgange der gleichgerichteten Halbwellen im Takt der doppelten Netzfrequenz periodisch schließt und daß ein Hilfsgleichrichter über die Serienschaltung einer Boost-Induktivität und einer in Durchlaßrichtung angeordneten Diode mit dem Ladekondensator verbunden ist, wobei der Verbindungspunkt der Boost-Induktivitat mit der Diode über einen zweiten gesteuerten Schalter mit Masse verbunden ist, und der zweite Schalter über eine zweite Ansteuerschaltung so gesteuert ist, daß der Ladekondensator in Zeitbereichen um die Nulldurchgänge der gleichgerichteten Halbwellen bei einer Taktfrequenz geladen wird, die erheblich höher als die Netzfrequenz ist, wobei die Ladespannung höher als der Scheitelwert der Netzspannung gewählt wird. Dank der Verwendung der zusätzlichen Boost-Schaltung ergibt sich eine weitere Verbesserung des Eingangsstromverlaufes im Sinne eines geringeren Oberwellenanteils.

Zweckmäßig ist es, wenn dem Hilfsgleichrichter ein Hilfskondensator unmittelbar nachgeschaltet ist. Die Taktfrequenz des zweiten gesteuerten Schalters kann im kHz-Bereich liegen und der Hilfsgleichrichter ist mit Vorteil von zwei bezüglich des Vollweggleichrichters als Halbbrücke geschalteten Dioden gebildet.

Die Erfindung samt anderen Vorteilen ist im folgenden anhand eines Ausführungsbeispieles näher erläutert, das in der Zeichnung veranschaulicht ist. In dieser zeigen
- Fig. 1: eine Ausführungsform der Erfindung in einem schematischen Schaltbild und
- Fig. 2: in drei Diagrammen den zeitlichen Verlauf der Ausgangsspannung bzw. des Ausgangsstromes in zwei Lastfällen bei der Ausführung nach Fig. 1.

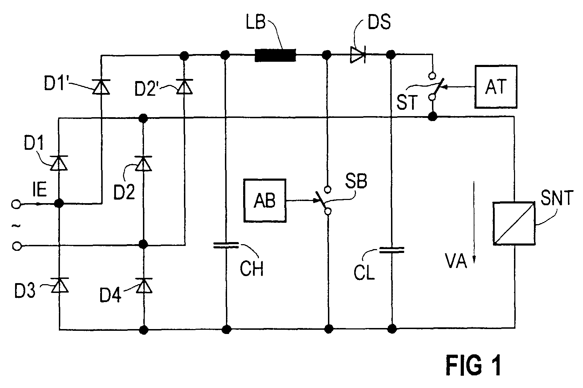

Falls man etwas mehr Aufwand in Kauf nimmt, um eine Verbesserung der Netzbelastung zu erzielen, kann man die Schaltung nach Fig. 1 verwenden, die zusätzlich einen Boost-Converter mit eigenem Gleichrichter besitzt.

Die Last bzw. das Schaltnetzteil SNT liegt direkt, gegebenenfalls auch über ein Filter oder Filterglied an dem Ausgang des Vollweggleichrichters D1..D4. Es ist weiters ein Hilfsgleichrichter, bestehend aus zwei zusätzlichen Dioden D1', D2'und den Dioden D3, D4 vorgesehen. Der Ausgang dieses Hilfsgleichrichters liegt über die Serienschaltung einer Boost-Induktivitat LB und einer in Durchlaßrichtung angeordneten Diode DS an dem Ladekondensator CL. Dem Hilfsgleichrichter D1', D2' unmittelbar nachgeschaltet ist noch ein Hilfskondensator CH.

Der Ladekondensator CL ist mit der Last SNT über einen ersten gesteuerten Schalter ST verbunden, der über eine erste Ansteuerschaltung AT so gesteuert ist, daß er in einem Zeitbereich um die Nulldurchgänge der gleichgerichteten Halbwellen im Takt der doppelten Netzfrequenz periodisch schließt.

Der Verbindungspunkt der Boost-Induktivität LB mit der Diode DS ist über einen zweiten gesteuerten Schalter SB mit Masse verbunden. Dieser zweite Schalter SB ist über eine zweite Ansteuerschaltung AB so gesteuert, daß der Ladekondensator CL in Zeitbereichen um die Nulldurchgänge der gleichgerichteten Halbwellen bei einer Taktfrequenz geladen wird, die erheblich höher als die Netzfrequenz ist, wobei die Ladespannung höher als der Scheitelwert der Netzspannung gewählt wird.

Der Schalter SB, der ebenso wie der Schalter ST z.B. als Feldeffekttransistor ausgebildet sein kann, wird mit einer Frequenz im kHz-Bereich, typisch zwischen 20kHz und 100kHz getaktet, jedoch nicht wie üblich über die ganze Halbperiode, sondern nur eine vorgewählte Zeit um die Nulldurchgänge. Hierdurch werden die Typenleistung der Längsdrossel, hier der Boost-Induktivitat LB, sowie des Transistorschalters SB und auch die Verlustleistung der Gesamtschaltung veringert. Der Oberwellenanteil des Eingangsstromes IE kann gegenüber der einfachen Graetz-Gleichrichterschaltung mit Ladekondensator stark herabgesetzt werden, da nun auch außerhalb der Spannungsmaxima ein Stromfluß erreicht wird und die Stromspitzen im Bereich der Spannungsmaxima entfallen können.

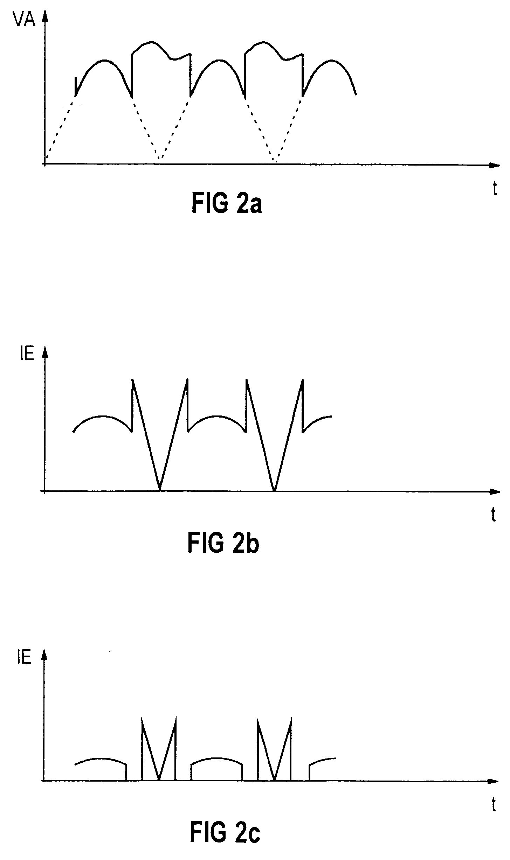

Der mit doppelter Netzfrequenz getaktete Schalter ST wirkt im Sinne einer Verbreiterung der Stromimpulse im Bereich der Spannungsmaxima. Insgesamt ergibt sich ein über die Periodendauer gut verteilter Stromverlauf, wie sich aus Fig. 2 ablesen läßt. Fig. 2a zeigt den Verlauf der Ausgangsspannung und man erkennt deutlich die Spannungsüberhöhung an CL im Bereich der Nulldurchgänge, hervorgerufen durch den Hochsetzsteller LB, SB, DS, CL (Boost-Converter). Fig. 2a und 2b betreffen den Betriebsfall "100 % Nennlast" und aus Fig. 2b zeigt sich, daß - abgesehen von den Nulldurchgängen immer Eingangsstrom fließt. Fig. 2c betrifft eine Last von lediglich 25% Nennlast. In diesem Fall gibt es Zeitabschnitte, während welcher kein Eingangsstrom fließt, doch ist hier der Strom insgesamt geringer.

Mit der Schaltung nach Fig. 1 ergibt sich somit ohne erheblichen Mehraufwand eine weitere Verbesserung in Hinblick auf geringen Oberwellenanteil und Leistungsfaktor. Die gesteuerten Schalter SB, ST müssen je nur einen Teil der Gesamtschaltleistung übernehmen, zumal der Stromfluß zur Last zum Teil auch direkt über die Gleichrichterbrücke erfolgt. Insgesamt können für die Leistungshalbleiter daher kostengünstigere Typen gewählt werden.

## Patentansprüche

1. Netzgleichrichterschaltung für Stromversorgungsgeräte, insbesondere für Schaltnetzteile, mit einem an der Netzspannung liegenden Vollweggleichrichter (D1..D4), dem ein Ladekondensator (CL) nachgeschaltet ist, sowie mit zumindest einem gesteuerten Schalter (SB, ST) zur getakteten zusätzlichen Energieübergabe an die Last,
**dadurch gekennzeichnet,** daß
a) die Last (SNT) an dem Ausgang des Vollweggleichrichters (D1..D4) liegt und der Ladekondensator (CL) mit der Last über einen ersten gesteuerten Schalter (ST) verbunden ist, welcher über eine erste Ansteuerschaltung (AT) so gesteuert ist, daß er in einem Zeitbereich um die Nulldurchgänge der gleichgerichteten Halbwellen im Takt der doppelten Netzfrequenz periodisch schließt, und
b) ein Hilfsgleichrichter (D1', D2') über die Serienschaltung einer Boost-Induktivitat (LB) und einer in Durchlaßrichtung angeordneten Diode (DS) mit dem Ladekondensator verbunden ist, wobei der Verbindungspunkt der Boost-Induktivitat mit der Diode über einen zweiten gesteuerten Schalter (SB) mit dem negativen Ausgang des Vollweggleichrichters verbunden ist, und der zweite Schalter über eine zweite Ansteuerschaltung (AB) so gesteuert ist, daß der Ladekondensator in Zeitbereichen um die Nulldurchgänge der gleichgerichteten Halbwellen bei einer Taktfrequenz geladen wird, die erheblich höher als die Netzfrequenz ist, wobei die Ladespannung höher als der Scheitelwert der Netzspannung gewählt wird.

2. Netzgleichrichterschaltung nach Anspruch 1,
**dadurch gekennzeichnet,** daß
dem Hilfsgleichrichter (D1', D2') ein Hilfskondensator (CH) unmittelbar nachgeschaltet ist.

3. Netzgleichrichterschaltung nach Anspruch 1 oder 2,
**dadurch gekennzeichnet,** daß
die Taktfrequenz des zweiten gesteuerten Schalters (SB) im kHz-Bereich liegt.

4. Netzgleichrichterschaltung nach einem der Ansprüche 1 bis 3,
**dadurch gekennzeichnet,** daß
der Hilfsgleichrichter von zwei bezüglich des Vollweggleichrichters(D1..D4) als Halbbrücke geschalteten Dioden (D1', D2') gebildet ist.

## Claims

1. Mains rectifier circuit for power supply units, in particular for switched-mode power supplies, having a full-wave rectifier (D1..D4) which is connected to the mains voltage and downstream of which a smoothing capacitor (CL) is connected, and having at least one controlled switch (SB, ST) for additional energy transfer, in a pulsed manner, to the load,
characterized in that
a) the load (SNT) is connected to the output of the full-wave rectifier (D1..D4) and the smoothing capacitor (CL) is connected to the load via a first controlled switch (ST) which is controlled via a first drive circuit (AT) such that it closes periodically at the rate of twice the mains frequency in a time period around the zero crossings of the rectified half-cycles, and
b) an auxiliary rectifier (D1', D2') is connected to the smoothing capacitor via the series circuit formed by a boost inductance (LB) and a diode (DS) which is arranged in the forward direction, the junction point between the boost inductance and the diode being connected to the negative output of the full-wave rectifier via a second controlled switch (SB), and the second switch being controlled via a second drive circuit (AB) such that the smoothing capacitor is charged, in time periods around the zero crossings of the rectified half-cycles, at a clock frequency which is considerably higher than the mains frequency, the charging voltage being selected to be higher than the peak value of the mains voltage.

2. Mains rectifier circuit according to Claim 1, characterized in that
an auxiliary capacitor (CH) is connected directly downstream of the auxiliary rectifier (D1', D2').

3. Mains rectifier circuit according to Claim 1 or 2, characterized in that
the clock frequency of the second controlled switch (SB) is in the kHz range.

4. Mains rectifier circuit according to one of Claims 1 to 3, characterized in that
the auxiliary rectifier is formed by two diodes (D1', D2') which are connected as a half-bridge with respect to the full-wave rectifier (D1..D4).

## Revendications

1. Circuit redresseur de secteur destiné à des appareils d'alimentation en courant, notamment à des alimentations à découpage, comportant un redresseur à deux alternances (D1 .. D4) auquel est appliquée la tension du secteur et en aval duquel est branché un condensateur de charge (CL), ainsi qu'au moins un interrupteur (SB, ST) commandé destiné à la transmission cadencée d'énergie supplémentaire à la charge,
caractérisé par le fait que
a) la charge (SNT) est appliquée à la sortie du redresseur à deux alternances (D1 .. D4), et que le condensateur de charge (CL) est relié à la charge par l'intermédiaire d'un premier interrupteur (ST) commandé, lequel est commandé par l'intermédiaire d'un premier circuit de commande (AT) de telle sorte qu'il se ferme périodiquement à une cadence double de la fréquence du secteur dans une plage de temps située autour des passages par zéro des alternances redressées, et
b) un redresseur auxiliaire (D1', D2') est relié au condensateur de charge par l'intermédiaire du circuit série d'une inductance boost (LB) et d'une diode (DS) disposée dans le sens passant, le point de liaison entre l'inductance boost et la diode étant reliée à la sortie négative du redresseur à ceux alternances par l'intermédiaire d'un deuxième interrupteur (SB) commandé, et le deuxième interrupteur étant commandé par l'intermédiaire d'un deuxième circuit de commande (AB) de telle sorte que, dans des plages de temps situées autour des passages par zéro des alternances redressées, le condensateur de charge soit chargé à une fréquence de cadençage qui est nettement plus grande que la fréquence du secteur, la tension de charge étant choisie supérieure à la valeur de crête de la tension du secteur.

2. Circuit redresseur de secteur selon la revendication 1,
caractérisé par le fait que
un condensateur auxiliaire (CH) est branché juste en aval du redresseur auxiliaire (D1', D2').

3. Circuit redresseur de secteur selon la revendication 1 ou 2,
caractérisé par le fait que
la fréquence de cadençage du deuxième interrupteur (SB) commandé se situe dans la plage des kHz.

4. Circuit redresseur de secteur selon l'une des revendications 1 à 3,
caractérisé par le fait que
le redresseur auxiliaire est constitué de deux diodes (D1', D2') qui sont branchées en demi-pont par rapport au redresseur à deux alternances (D1 .. D4).
